(19) **Europäisches Patentamt**

**European Patent Office**

**Office européen des brevets**

(11) **EP 0 853 971 A1**

(12) **EUROPEAN PATENT APPLICATION**
published in accordance with Art. 158(3) EPC

(43) Date of publication:
22.07.1998 Bulletin 1998/30

(51) Int. Cl.$^6$: **B01D 53/78**, B01D 53/50, B01D 53/56, B01D 53/18, B01D 47/14

(21) Application number: 97923308.7

(22) Date of filing: 27.05.1997

(86) International application number:
PCT/JP97/01789

(87) International publication number:
WO 97/45191 (04.12.1997 Gazette 1997/52)

(84) Designated Contracting States:
DE FR GB SE

(30) Priority: 27.05.1996 JP 152863/96

(71) Applicant: Saitoh, Shigeru
Iwaki-shi, Fukushima 974 (JP)

(72) Inventor: Saitoh, Shigeru
Iwaki-shi, Fukushima 974 (JP)

(74) Representative:
Bannerman, David Gardner et al
Withers & Rogers
4 Dyer's Buildings
Holborn
London, EC1N 2JT (GB)

(54) **APPARATUS AND METHOD FOR WET TYPE SIMULTANEOUS DECONTAMINATING AND DUST-REMOVING GAS TREATMENT**

(57) An apparatus and a method using the apparatus for crossflow treatment of gases comprising, a packed chamber filled with packing materials, wherein more than 5 tons / m$^2$ • hr of alkaline liquid is sprayed over the packing materials from nozzles mounted at the top of the packed chamber. Flue gas is introduced from a perforated plate disposed in front of the packed chamber at a flow rated of over 100 cm / sec, subsequently the flue gas is forced out through a perforated plate disposed at the back of the packed chamber, and a ratio of a sectional area for treated gas and a sectional area for the alkaline liquid is at least 5. The invention can perform an effective removal of pollutants and dust form the flue gas.

Fig. 2

## Description

### FIELD OF THE INVENTION

The present invention relates to an apparatus and a method for removing pollutants and dust simultaneously from flue gas, more specifically relates to a cross-flow removal of pollutants in a packed tower.

### BACKGROUND OF THE INVENTION

### PRIOR ART

Numerous attempts have been made and are being made to remove pollutants from the various flue gases which pollute the atmosphere. Various apparatus and processes have been developed for this purpose. These include wet scrubbers, electrostatic precipitators and venturi type scrubbers.

In the conventional methods of removing pollutants and dust from flue gas by packed tower system, liquid flows down and the flue gas rises in a packed tower. However it is difficult to scrub an object gas completely by the conventional method, because it is likely to go into a flooding region even at small amount of liquid and gas flow.

Japanese patent laid open No.Sho.50-104436 ( JP A 75-104436 ), discloses a concurrent packed tower, in which the liquid and the gas flow downward. The invention solves the aforementioned problems and facilitate effective removal of pollutants and dust of a large amount, but it is not capable of removing pollutants and dust completely.

It requires a huge amount of flowing down washing liquid and a site area which are necessary to wash out soot and dust completely from the packing materials while keeping a slow flow rate of the gas which passes through the packing material section and preventing them from sticking to the packing materials, consequently the method is not practical and economical.

A cross-flow horizontal water-cooling tower, disclosed in " Water-Cooling Tower", page 12, vol. II-2, New Chemical Industry Course ( published on July 12, 1957 ), published by Nikkan Kogyo Newspaper Co. Ltd., of which purpose is to cool water and it does not refer to a removal of small particulate soot and dust in the air. Therefore, considering the cooling effect, the air flow rate of this water-cooling tower is designed more than the order of one meter per second and this water-cooling tower is not designed based on the idea of capturing dust in the gas stream completely by the water films of the surfaces of its packing materials. Consequently, there has not been a need that the ratio of a gas-flow sectional area and a liquid-flow sectional area is more than 5.

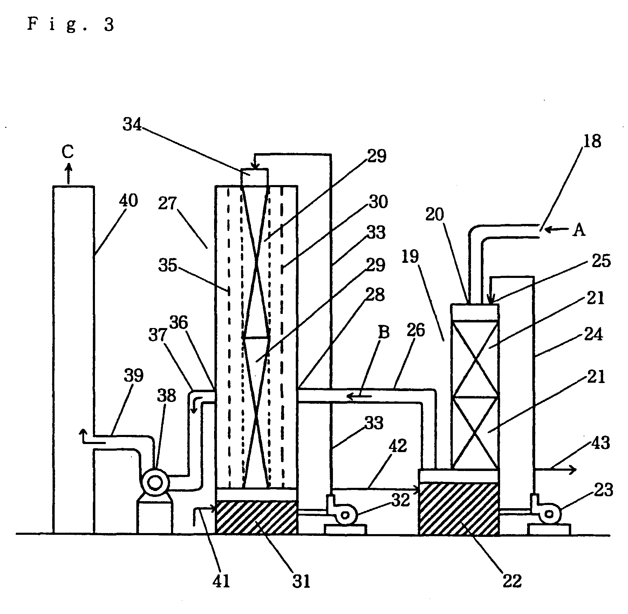

As illustrated in Fig. 3, in an ordinary washing apparatus which employs concurrent or countercurrent packed tower, the velocity of the gas stream is designed as more than 100 cm per second, and a ratio of gas-flow sectional area and a liquid-flow sectional area equals 1, which is not enough for removing pollutants and dust completely.

An invention disclosed in the Japanese examined patent publication No.Hei 3-7410 ( JP B 91-7410 ) is used for tunnel construction and is merely a scrubbing device in which the liquid flows down and the gas flows up.

An invention disclosed in the Japanese examined publication No.Hei 6-28691 ( JP B 94-28691 ) is the one concerning recycling system of garbage in the water and its purpose is different from the present invention.

Further, the invention disclosed in the Japanese examined patent publication No.Hei 6-55252 ( JP B 94-55252 ) has plural plane filters which are disposed having their filtering holes shifted each other and this dose not have any relation with the present neither.

The present invention provides an apparatus and a method which can capture pollutants and dust in polluted gas perfectly, consequently sufficient effects of removing pollutants and dust can be achieved.

### DISCLOSURE OF THE INVENTION

The present invention includes following embodiments.

1. An apparatus for removing pollutants and dust from flue gas by cross-flow treatment comprising:

a packed chamber having plates with a plurality of apertures disposed at the from and the back of said chamber, said packed chamber filled with packing materials; a spraying means directing downward for spraying liquid for removing pollutants and dust, mounted at the top of said chamber;
said liquid being sprayed uniformly with respect to a section of said packed chamber, polluted gas being introduced from the front of said packed chamber and forced out;
wherein a ratio of a section for gas and a section for sprayed liquid is at least 5, a gas flow rate is under and
and passing said spraying liquid is not at least less than 5, a flowing speed of gas is under 100 cm / sec, and a flow rate of the liquid is above 5 tons / m$^2$ · hr.

2. A method for a crossflow treatment of flue gas comprising:

spraying liquid for removing pollutants and dust uniformly over packing materials from a spraying means mounted at the top of a packed chamber:
introducing a flue gas from the front of said packed chamber crossing the flow direction of the liquid and forcing it out;

wherein a ratio of a section for flue gas and a section for sprayed liquid is at least 5, a gas flow rate is under 100 cm / sec, and a flow rate of the liquid is above 5 tons / m$^2$ • hr.

BRIEF DESCRIPTION OF THE DRAWINGS

Fig. 1 is a front elevation view of an apparatus of the present invention.
Fig. 2 is a side elevation view of an apparatus of the present invention.
Fig. 3 is a schematic view illustrating an embodiment of a system concerning a treating apparatus of flue gas of the present invention.
Fig. 4 is a schematic side view of an conventional scrubber having a packed tower.

BEST MODE OF THE INVENTION

EMBODIMENT 1

Referring to the attached drawings, the present invention will be further explained in detail.

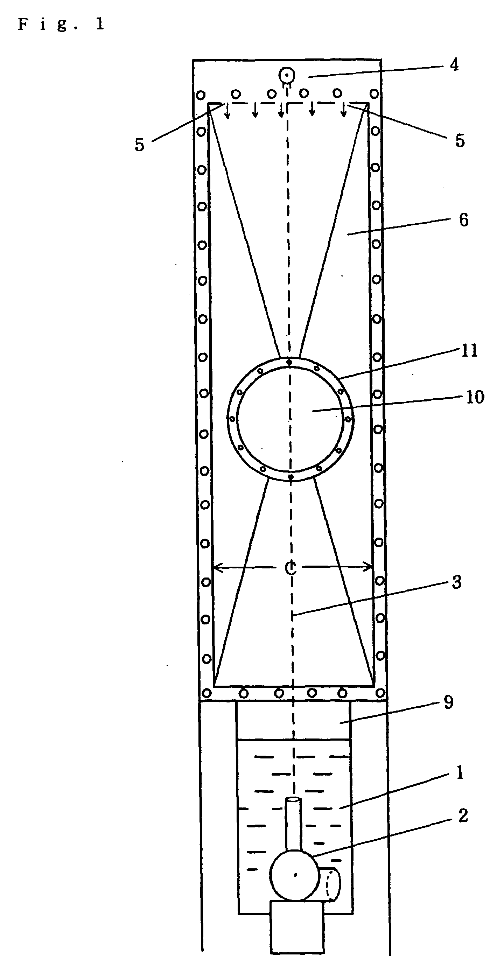

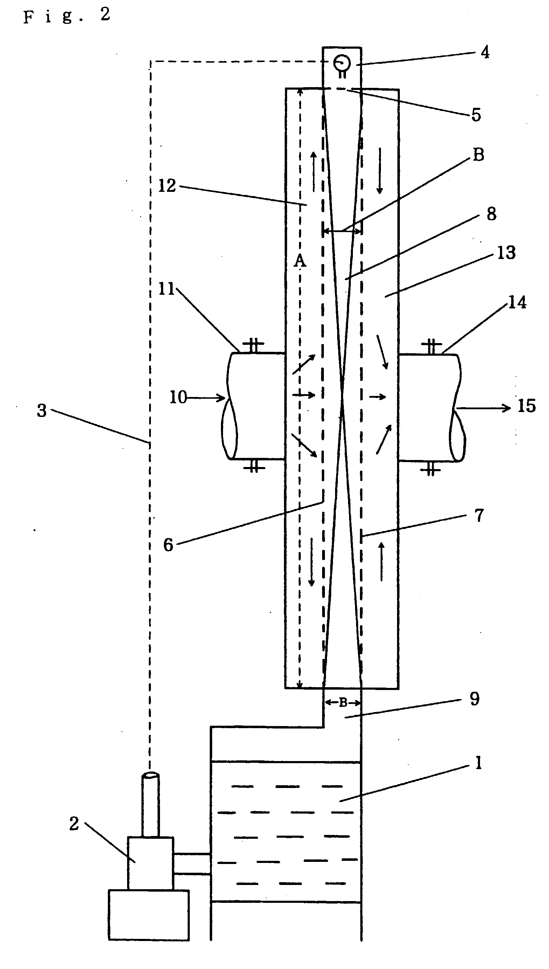

Fig. 1 is a front elevation view of an apparatus of the present invention. Fig. 2 is a side elevation view of an apparatus of the present invention.

In the apparatus of treating flue gas illustrated in Fig. 1 and Fig. 2, an alkaline liquid stored in a tank 1 for removing pollutants and dust is sprayed downward from nozzles 5,5 disposed at the top of the packed chamber 8 by a pump 2 via a conduit 3.

A perforated plates 6, 7 which have a plurality of holes, ie. ,wire mesh or perforated plates are disposed at the front and back of the packed and a plurality of nozzles are disposed at the top portion of the packed the packed chamber 8. The packing materials (for example, materials of which trademarks are "Macmahon" , "Saddle" ,"Tellerettes" and son on can be employed.) are filled up inside the packed chamber 8. The packed chamber 8 is filled with the packing materials and its surfaces preferably have an area of more than 150 m$^2$/m$^3$.

The alkaline liquid for removing pollutants and dust is sprayed to the upper space of the packed chamber 8 from the nozzles 5,5 • • uniformly with respect to the section of the packed chamber 8.

A passage section area of a connecting portion 9 of the packed chamber 8 and the tank 1 is designed large enough to allow the alkaline liquid flow down smoothly, so that the alkaline liquid does not stuck up, nor fill up the inside the packed chamber 8 and it flows down along the packing materials remaining spaces.

A ratio of the vertical sectional area for the polluted gas and a cross sectional area for the alkaline liquid ( See Fig. 1 and Fig. 2 ),

$$A \times C / B \times C = A / B$$

is at least 5, preferably more than 7 and less than 100, more preferably more than 10 and less than 50.

Wherein,

A :        Height of the packed chamber,
B :        Depth of the packed chamber,
c :        Width of the packed chamber.

In case that the A/B is less than 5, the system not does not run economically, because the volume of the polluted gas is not sufficient compare with the volume of the alkaline liquid. On the other hand, in case the value A/B is over 100, the pollutant removal efficiency is not sufficient, because the alkaline liquid is not enough for removing pollutants.

The system is constituted such that the alkaline liquid of more than 5 tons / m$^2$ • hr with respect to the cross section of the packed chamber 8 is sprayed, preferably more than 10 tons / m$^2$ • hr, further preferably more than 20 tons / m$^2$ • hr and less than about 100 tons /m$^2$ • hr, which is large enough not only to wet the surfaces of the packing materials sufficiently but also to scrub dust completely captured by the surfaces.

If the volume of the alkaline liquid is less than 5 tons / m$^2$ • hr with respect to the sectional area of the packed chamber 8, the removal efficiency of the pollutants and dust is not sufficient, i.e., washing out the dust sticking to the packing materials is not sufficient. On the other hand, if the spraying volume exceeds 100 tons / m$^2$ • hr, the system does not run economically, because the removal of pollutants does not increase lineally with the increase of the alkaline liquid.

Examples of alkaline liquid are a solution of sodium hydroxide, sodium carbonate dehydrate, caustic potash, aqua ammonia, calcium hydroxide, magnesium hydroxide or like of pH between 8 - 14.

Then, a polluted gas 10 is introduced to a dispersion pressure chamber 12 disposed in front of the wire mesh or the perforated plate 6, subsequently the gas is dispersed fully and uniformly to pass through the packed chamber 8.

The packed chamber 8 is filled with the packing materials of which the surfaces are wet with alkaline liquid, so this polluted gas contact with the wet surfaces many times during the passing through the packing materials. The polluted gas, consequently is removed and the dust are captured and absorbed by the water films of the surfaces of the packing materials.

In this case, the velocity of the polluted gas passing through the packed chamber 8 is under 100 cm / sec, preferably under 30 cm / sec, more preferably under 20 cm / sec. Consequently the system can capture dust having a diameter of micron order, still more submicron in size.

If the velocity of the polluted gas passing through the packed chamber 8 exceeds 100 cm / sec, the removal efficiency is not sufficient, on the other hand, if the velocity of the polluted gas passing through the packed chamber 8 is under 1 cm / sec, the system does not run economically preferable, because the capacity of the gas treatment is not sufficient.

A clean exhaust gas 15, purified while passing through the packed chamber 8, passes through the wire mesh or a perforated plate 7, then it is collected again in the collecting-chamber 13 and it is forced out from an exhaust duct 14.

After all, the value of the ratio of the sectional area of the packed chamber 8 and the sectional area for flowing down of the alkaline spraying liquid for removing pollutants and dust is at least 5.

And the volume or the alkaline liquid for operation in the packed chamber 8 is

$$L / S \cong 5 \text{ tons} / m^2 \cdot hr.$$

where,

L :     volume of alkaline liquid [ ton / hr ],
S :     sectional area for flowing down alkaline solution [ $m^2$ ].

And the velocity of the gas stream passing through the packed chamber 8 is under 100 cm / sec.

Fig. 1 and Fig. 2 illustrate a tower for removing pollutants and dust where an effective height is 10 m, an effective length is 1 m and an effective width is 0.5 m. The packed chamber 8 of the tower has perforated plates 6,7 at its front and back respectively, and is filled up with Telleretes S-O produced by Nittetsukakoki Co. Ltd. The circulation tank 1 storing the alkaline liquid for removing pollutants and dust located at the lower portion of the tower, receives sodium hydroxide liquid of pH 10 which flows down through the packing materials, while wetting the surfaces of the packing materials. The sodium hydroxide liquid is pumped up and sprayed uniformly from the top portion of the packed tower 8. The volume rate of the flowing liquid is 18 tons / hr, i.e., 36 tons / $m^2$ · hr.

A polluted air 10 of a room temperature containing a 0.5 g / $m^3$ of graphite carbon soot and a 100 ppm concentration of HCL, produced by the incomplete combustion of acetylene is flown uniformly at a speed of 0.7 $m^3$ / sec through the perforated plate 6 to the back of the packed layer through the front of the packed layer. The velocity of the air is 7 cm / sec. The scrubbed air after passing through the perforated plate 7 contains carbon soot and dust at a concentration of 0.007 g / $m^3$ and HCL is not detected, because HCL concentration is below 1 ppm.

After the 10 days continuous operation, dust sticking to the packing materials Tellerettes S-O is not observed.

EMBODIMENT 2

An apparatus same as illustrated in Fig. 1 and Fig. 2 with the exception that its effective height is 6 m is used. Industrial wastes are burnt in a rotary kiln incinerator and a part of the flue gas, containing 300 ppm of HCL, 100 ppm of SOx, 250 ppm of NOx and 0.10 gr / $Nm^3$ of dust, is extracted and introduced into the packed chamber 8 through a duct 11 and the gas traverses the packing material of Tellerettes S-O layer of 6 m height, 1 m of width and 0.5m of thickness, at a flow rate of 30 $Nm^3$ / min.

Sodium hydroxide solution of pH 13 is flown down from the top of the packing material layer whose sectional area is 0.5 $m^2$ ( 1 m × 0.5 m ) through upper holes 5 at a rate of 18 tons / hr.

HCL and SOx are not detected in the effluent gas which passes through the packing materials and its NOx concentration is 100 ppm.

The dust concentration is 0.02 gr / $Nm^3$ and the pressure drop at the packed tower is 10 mm of water.

EMBODIMENT 3

Fig. 3 illustrates an embodiment of a system concerning an apparatus for treating effluent gas of the present invention.

A hot effluent exhaust gas A is introduced from the top 20 of a gas-liquid concurrent packed tower 19 through a duct 18 and it flows down in a packed chamber 21 which is filled with packing materials.

At the same time, an alkaline washing liquid in a reservoir chamber 22 is sent by the pump 23 through a washing liquid duct 24 and is sprayed from the top 25 of the gas-liquid concurrent packed tower 19

The effluent exhaust gas B, which passes the gas-liquid concurrent packed tower 19 and is scrubbed to some extent, is sent to the packed chamber 29 through a duct 26, an inlet 28 of gas-liquid crossflow-contact packed tower 27 and the front side 30 of the packed chamber 29.

The alkaline washing liquid, which is sent from a washing liquid reservoir 31, the pump 32 and a washing liquid duct 33, is introduced from a top 34 of the gas-liquid crossflow-contacting packed tower 27 and is designed to flow down almost uniformly from the top of the packed chamber 29 packed with packing materials

The effluent exhaust gas B, which passes the front side 30 of the packed chamber 29 filled with packing materials, is scrubbed by contacting with the packing materials which are wet by the alkaline washing liquid in the packed chamber 29. Then the effluent exhaust gas B is discharged from the rear side 35 and is released to the air from a chimney 40 as a scrubbed gas C, through a duct 37, an induction fan 38 and a duct 39.

Newly prepared washing liquid is reserved in a reservoir chamber 31 from a duct 41 and is sent to the top 34 of the gas-liquid crossflow-contact packed tower 27 for circulating in the gas-liquid crossflow-contact packed tower 27. A part of the newly prepared washing liquid is sent to a washing liquid reservoir 22 disposed under the gas-liquid concurrent packed tower 19 for circulating therein, by the pump 32 and a duct 42.

Furthermore, after circulating the alkaline washing liquid, when its alkali concentration is decreased, it is extracted from a duct 43.

Aqueous sodium hydroxide, of which amount of circulating liquid is 10 ton / hr and pH is 10, is sent to the gas-liquid concurrent packed tower 19, of which sectional area is 1 $m^2$ and the effective height is 4 m and the packed chamber is packed with S-O Tellerettes packing materials. Hot flue gas A produced by the combustion of industrial wastes is passed through the packed tower 19 from the duct 18 at a flow speed of 150 cm / sec and at a temperature of 1000 °C. The temperature of the gas falls down to about 60 °C by contacting with the washing liquid and by the adiabatic cooling in the evaporation of water.

At the beginning, the HCL concentration is 1400 ppm, the concentration of soot dust is 3 g / $Nm^3$, the concentration of NOx is 300 ppm.

The exhaust gas A contained HCL of concentration of 1 ppm, soot dust of concentration of 0.1 g / $Nm^3$ and NOx of a concentration of 280 ppm ( dry gas ).

Subsequently the gas B is fed to the gas-liquid crossflow contact packed tower 27 of which packed chamber is filled with S-O Tellerettes packing materials at a gas speed of 10 cm / sec through the duct 26.

The gas-liquid cross-flow contact packed tower 27 is 1$m^2$ in a vertical sectional area for passing the washing liquid, 15 $m^2$ in a cross sectional area for passing the gas, 15m in an effective height and 10 tons / hr in the amount of circulating washing liquid.

The gas is discharged to the atmosphere from a chimney 40 through a tower 27 for removing the pollutants and the dust of gas-liquid crossflow-contacting packed tower 27 and induction fan 38.

The HCL concentration is below 1 ppm ( detection limit ), the soot particulate concentration is 0.01 g / $m^3$ and the NOx concentration is 90 ppm ( dry gas ) in the clean gas C.

COMPARATIVE EXAMPLE 1

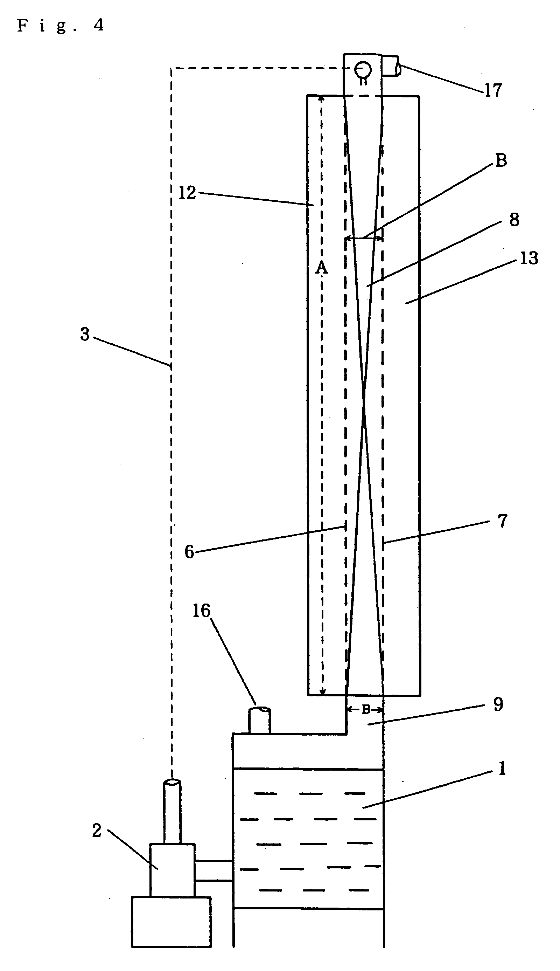

Fig. 4 is a schematic side view of a conventional scrubbing apparatus which has a packed tower.

What Fig. 4 illustrates an apparatus similar to the apparatus which is used in the embodiment 1 of which effective height is 10 m, however it is a gas-liquid countercurrent tower for removing pollutants and dust. The packed chamber 8 is packed with Tellerettes S-O produced by Nittetsukakoki Co.Ltd.and the circulation tank 1, of which height is 3 m, for removing pollutants and dust is disposed at the lower portion of the tower which receives the sodium hydroxide liquid of a pH 10 fallen while wetting packing materials. The aforementioned sodium hydroxide liquid is sprayed uniformly from a spraying means 4 by the pump 2. The alkaline liquid flow is 18 tons / hr, namely 36 tons / $m^2$ · hr.

An air 10 of room temperature containing carbon soot 0.5 g / $m^3$ produced by the incomplete combustion of acetylene 0.5 g / $m^3$ and HCL 100 ppm is flown downward and uniformly at a speed of 0.7 $m^3$ / sec from the top portion 17 of the packed chamber 8. The air flow rate is 140 cm / sec. The concentration of the residual HCL in the scrubbed air which passes the packed tower is below 1 ppm, consequently it can not be detected. However the concentration of carbon soot and dust is decreased to 0.04 g / $m^3$.

After the 10 days continuous operation, no sticking of soot and dust to Tellerettes S-O packing materials can not be observed.

In case that in Fig. 4, aforementioned air is introduced from a lower portion 16 and flown up from the bottom to the top and exhausted out from the top portion 17 with the same conditions, the alkaline liquid does not flow down nor overflow.

COMPARATIVE EXAMPLE 2

A countercurrent or concurrent tower for removing pollutants and dust, which is similar to what is shown in Fig. 4, is used. A polluted gas containing HCL 300 ppm, SOx 100 ppm, NOx 250 ppm and soot dust 0.10 gr / $Nm^3$, is introduced at a rate of 30 $Nm^3$ / min from the lower inlet 16 ( " outlet " according to circumstances ), and flown uniformly from the bottom to the top in the S-O Tellerettes packed layer 8 of which height is 6 m and width is 1m and thickness is 0.5 m, subsequently it is extracted from the top outlet 17( " inlet " according to circumstances ).

In case that sodium hydroxide solution of a pH 13 is flown uniformly at a rate of 18 tons / hr from the top of the packed layer 8 of which sectional area is 0.5 $m^2$, the liquid did not flow down and it blew up in the reverse direction.

In case that the amount of liquid flowing down is decreased to 9 tons / hr, the pressure drop between the top and the bottom is 600 mm of water and HCL is not detected in the gas, the concentration of SOx is 40 ppm, the concentration of NOx is 150 ppm and the concentration of soot dust is 0.07 gr / $Nm^3$, consequently scrubbing condition is not sufficient.

INDUSTRIAL APPLICABILITY OF THE INVENTION

The present invention removes not only chemical compounds such as acidic materials containing SOx, NOx gas, but also removes dust on the order of micron or submicron in size at a very high rate, compared with a conventional apparatus for separating polluted gas, consequently the present invention can provide advantageous effects which have not been hitherto expected.

**Claims**

1. An apparatus for removing pollutants and dust from gas by crossflow treatment comprising:

a packed chamber having plates with a plurality of apertures, disposed at the front and the back of said chamber, said packed chamber filled with packing materials; a spraying means directing downward for spraying liquid for removing pollutants and dust, mounted at the top of said chamber;

said liquid being sprayed uniformly with respect to a section of said packed chamber, a polluted gas being introduced from the front of said packed chamber and forced out;

wherein a ratio of a section for the gas and a section for the sprayed liquid is at least 5, a gas flow rate is under 100 cm / sec, and a flow rate of the liquid is more than 5 tons / $m^2$ · hr.

2. A method for a crossflow treatment of gas comprising:

spraying liquid for removing pollutants and dust uniformly over a packing materials form a spraying means mounted at the top of a packed chamber;

introducing a flue gas from the front of said packed chamber crossing the flow direction of the liquid and forcing it out;

wherein a ratio of a section for the gas and a section for the sprayed liquid is at least 5, a gas flow rate is under 100 cm / sec, and a flow rate of the liquid is more than 5 tons / $m^2$ · hr.

F i g . 1

Fig. 2

Fig. 3

F i g .  4

## INTERNATIONAL SEARCH REPORT

International application No.

PCT/JP97/01789

**A.   CLASSIFICATION OF SUBJECT MATTER**

Int. $Cl^6$   B01D53/78, B01D53/50, B01D53/56, B01D53/18, B01D47/14

According to International Patent Classification (IPC) or to both national classification and IPC

**B.   FIELDS SEARCHED**

Minimum documentation searched (classification system followed by classification symbols)

Int. $Cl^6$   B01D53/34-53/85, B01D53/14-53/18, B01D47/00-47/18

Documentation searched other than minimum documentation to the extent that such documents are included in the fields searched

| | | | |
|---|---|---|---|
| Jitsuyo Shinan Koho | 1926 – 1997 | Jitsuyo Shinan Keisai | |
| Kokai Jitsuyo Shinan Koho | 1971 – 1997 | Koho | 1996 – 1997 |
| Toroku Jitsuyo Shinan Koho | 1994 – 1997 | | |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | JP, 50-43571, A (Ohka Kogyo K.K.), April 19, 1975 (19. 04. 75), Page 1, left column, lines 8 to 11; page 2, upper right column, lines 1 to 12; page 3, upper right column, lines 8, 9; drawings (Family: none) | 1, 2 |
| A | JP, 52-45667, B1 (Mitsubishi Plastics Industries Ltd.), November 17, 1977 (17. 11. 77), Page 1, column 1, lines 21 to 23; Fig. 9 (Family: none) | 1, 2 |
| Y | JP, 48-23677, A (Chiyoda Chemical Engineering & Construction Co., Ltd.), March 27, 1973 (27. 03. 73), Claim; page 4, lower left column, lines 15, 16; Figs. 2, 11 | 1, 2 |

☐ Further documents are listed in the continuation of Box C.      ☐ See patent family annex.

| | |
|---|---|
| *   Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| July 11, 1997 (11. 07. 97) | July 23, 1997 (23. 07. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)